# EUROPÄISCHE PATENTANMELDUNG

(11) **EP 2 211 134 A2**
(43) Veröffentlichungstag der Anmeldung: **28.07.2010**
(21) Anmeldenummer: 10000363.1
(22) Anmeldetag: 15.01.2010
(51) Int. Cl.: F28D 1/02, B01D 1/30, F17C 7/04

(54) **Verfahren und Vorrichtung zur Ableitung von Leckagegas aus einem Verdampfer**

(30) Priorität: 23.01.2009 DE 102009005923
(71) Anmelder: Linde Aktiengesellschaft, 80331 München (DE)
(72) Erfinder: Trott, Thomas, 80686 München (DE); Thalhammer, Roland, 81669 München (DE); Hang, Florian, 81371 München (DE)

(57) **Zusammenfassung**

Die Erfindung betrifft ein Verfahren sowie eine Vorrichtung zur Ableitung von Leckagegas (4) aus einem Verdampfer (V), durch den eine Flüssigkeit (1) in einem Leitungssystem (H) geführt und dabei verdampft wird. Das Leckagegas wird in einem Druckbehälter (D) aufgefangen und anschließend zur Entsorgung geregelt einer Fackel zugeführt.

## Beschreibung

Die Erfindung betrifft ein Verfahren zur Ableitung von Leckagegas aus einem Verdampfer, durch den eine Flüssigkeit in einem Leitungssystem geführt und dabei verdampft wird.

Weiterhin betrifft die Erfindung eine Vorrichtung zur Durchführung des Verfahrens.

Unter Leckagegas sei im Folgenden ein Gas zu verstehen, das in einem Verdampfer gebildet wird, wenn zu verdampfende oder verdampfte Flüssigkeit über eine Leckage aus dem Leitungssystem austritt, in dem sie durch den Verdampfer geführt wird.

In einer Vielzahl von industriellen Prozessen, wie der Ameisen- oder der Essigsäureproduktion, aber beispielsweise auch bei der Herstellung von Polycarbonaten oder Polyurethanen, wird Kohlenmonoxid in großen Mengen verbraucht. Der überwiegende Teil dieses Kohlenmonoxids wird in Synthesegasanlagen produziert und direkt an die Verbraucher abgegeben.

Typischerweise umfasst eine derartige Synthesegasanlage einen kryogenen Teil, in dem aus einem Wasserstoff und Kohlenmonoxid enthaltenden Synthesegas z. B. in einem Kondensationsprozess oder durch Methanwäsche ein Kohlenmonoxidprodukt abgetrennt wird, um anschließend einem oder auch mehreren Verbrauchern zugeführt zu werden. Störungen, wie beispielsweise der Ausfall eines Verbrauchers, führen zu Druckschwankungen und einer momentanen Überproduktion an Kohlenmonoxid durch die Synthesegasanlage. Andererseits führen Störungen in der Synthesegasanlage selbst dazu, dass zuwenig Kohlenmonoxid produziert wird.

Synthesegasanlagen können nur mit moderater Geschwindigkeit in ihrer Leistung verändert und neuen Leistungsanforderungen des oder der Verbraucher angepasst werden. Dies ist in der Praxis jedoch nicht ausreichend, um gelieferte und geforderte Leistung zu jedem Zeitpunkt in Übereinstimmung bringen zu können. Darüber hinaus ist eine Leistungsanpassung dann nicht möglich, wenn Störungen in der Synthesegasanlage auftreten.

Die Anforderungen an die Stabilität des Druckes, mit dem das Kohlenmonoxid zu dem oder den Verbrauchern gelangt, sind oft so hoch, dass auch im Normalbetrieb auftretende Druckschwankungen nicht toleriert werden können.

Zur Lösung dieses Problems wird beispielsweise in der Offenlegungsschrift DE102005003497 ein Verfahren angegeben, bei dem im kryogenen Teil einer Synthesegasanlage anfallendes flüssiges Kohlenmonoxid in einen Speicherbehälter geleitet wird, aus welchem es im Falle einer zu geringen Menge oder eines zu niedrigen Druckes des Kohlenmonoxidproduktes wieder in flüssiger Form entnommen, in einem Verdampfer verdampft und dem Produktstrom in geeigneter Menge und mit geeignetem Druck beigemischt wird.

Um das flüssige Kohlenmonoxid zu verdampfen, wird es nach dem Stand der Technik über ein Leitungssystem durch einen mit Wasser gefüllten Behälter geleitet. Die notwendige Verdampfungsenthalpie wird durch Niederdruckdampf bereitgestellt, der in das Wasser eingeleitet wird und es auf einer konstanten Temperatur von ca. 40°C hält.

Entsteht in der Rohrleitung eine Leckage, kann tiefkaltes flüssiges Kohlenmonoxid in das Wasser übertreten, wobei es verdampft und sein Volumen schlagartig vergrößert. Im Regelfall ist der Wasserbehälter zur Atmosphäre hin offen und entlässt das gasförmige Kohlenmonoxid im Schadensfall an sicherer Stelle in die Umgebung. Wünschenswert wäre es jedoch, das giftige Kohlenmonoxid beispielsweise in einer Fackel zu verbrennen und so zu entsorgen. Wegen der tiefen Temperatur des Kohlenmonoxids ist dies jedoch nicht immer möglich. Die Materialauswahl für Fackelsysteme wird durch das zu verbrennende Medium (Fackelgas) bestimmt. Es werden deshalb "warme" und "kalte" Fackelgaswege vorgesehen, deren Material entsprechend der zu erwartenden Temperatur des Fackelgases gewählt ist. Es ist aus diesem Grund nicht möglich, tiefkaltes Kohlenmonoxid in einen "warmen" Fackelgasweg einzuleiten, da hierbei die Festigkeit des Materials überschritten würde. Ein Einbringen in einen "kalten" Fackelgasweg ist ebenso nicht möglich, da mitgerissenes oder kondensiertes Wasser ausfrieren und zu Verlegungen führen würde.

Der Erfindung liegt daher die Aufgabe zugrunde, ein Verfahren der gattungsgemäßen Art sowie eine Vorrichtung zu dessen Durchführung anzugeben, die es ermöglichen, Leckagegas sicher und umweltgerecht aus einem Verdampfer abzuleiten.

Die gestellte Aufgabe wird verfahrensseitig erfindungsgemäß dadurch gelöst, dass das Leckagegas in einem Druckbehälter aufgefangen und anschließend zur Entsorgung geregelt einer Fackel zugeführt wird.

Der Druckbehälter wird hierbei als Speicher für das Leckagegas genutzt, aus dem es in einer Menge und mit einer Temperatur entnommen wird, die eine problemlose Entsorgung in einer Fackel erlauben.

Im Verdampfer entstehendes Leckagegas führt zu einem Druckanstieg im Druckbehälter, der zur Detektion von Leckagegas genutzt wird. Das erfindungsgemäße Verfahren weiterbildend wird daher vorgeschlagen, dass der Druck im Druckbehälter kontinuierlich überwacht und bei Überschreiten eines vorgegebenen Druck-Grenzwertes ein Signal ausgegeben wird, das dazu verwendet wird, die Zufuhr von zu verdampfender Flüssigkeit zum Verdampfer zu unterbrechen.

Eine andere Ausgestaltung des erfindungsgemäßen Verfahrens sieht vor, dass zur Detektion einer Leckage und zur Generierung eines Signals zur Unterbrechung der Zufuhr von zu verdampfender Flüssigkeit zum Verdampfer eine Temperatur überwacht wird, die sich durch austretendes Leckagegas verändert. Hierfür geeignet ist beispielsweise die Temperatur eines Wärmeträgermediums, mit dessen Hilfe Energie auf die zu verdampfende Flüssigkeit übertragen wird, und das in direktem Kontakt mit dem Leitungssystem steht, oder die Temperatur stromaufwärts oder stromabwärts eines Überdruckventils, über das Leckagegas aus dem Verdampfer zur Fackel abströmen kann, sobald ein voreingestellter Grenzdruck überschritten wird. In beiden Fällen führt austretendes Leckagegas zu einem raschen und signifikanten Abfall der überwachten Temperatur. Unterschreitet die überwachte Temperatur einen vorgegebenen Grenzwert, wird ein Signal ausgegeben, das dazu verwendet wird, die Zufuhr von zu verdampfender Flüssigkeit zum Verdampfer zu unterbrechen.

Das erfindungsgemäße Verfahren kann zur Ableitung von Leckagegas aus allen denkbaren Verdampfern eingesetzt werden. Mit besonderem Vorteil wird es jedoch zur Ableitung von Kohlenmonoxid eingesetzt, das sich als Leckagegas in Verdampfern bilden kann, in denen flüssiges und tiefkaltes Kohlenmonoxid im indirekten Wärmetauscher gegen warmes Wasser verdampft wird.

Weiterhin betrifft die Erfindung eine Vorrichtung zur Ableitung von Leckagegas aus einem Verdampfer, durch den eine Flüssigkeit in einem Leitungssystem führ- und dabei verdampfbar ist.

Die gestellte Aufgabe wird vorrichtungsseitig erfindungsgemäß dadurch gelöst, dass sie einen Druckbehälter umfasst, der den Verdampfer umgibt und der mit einer Leitung (Fackelleitung) mit einer Fackel verbunden ist.

Eine bevorzugte Ausgestaltung der erfindungsgemäßen Vorrichtung sieht vor, dass sie eine Einrichtung zur Überwachung des im Druckbehälter herrschenden Druckes umfasst, die mit einem in der Zuführungsleitung für die zu verdampfende Flüssigkeit angeordneten Absperrorgan derart in Wirkverbindung steht, das die Zuführungsleitung durch das Absperrorgan geschlossen wird, sobald der Druck im Druckbehälter einen Grenzwert überschreitet.

Eine weitere bevorzugte Ausgestaltung der erfindungsgemäßen Vorrichtung sieht vor, dass sie mit Temperatur-Tief-Schaltern ausgerüstet ist, mit denen die Temperatur in der Fackelleitung und im Verdampfer überwachbar sind, und die mit einem in der Zuführungsleitung für die zu verdampfende Flüssigkeit angeordneten Absperrorgan derart in Wirkverbindung steht, das die Zuführungsleitung durch das Absperrorgan geschlossen wird, sobald die Temperatur im Druckbehälter einen Grenzwert unterschreitet.

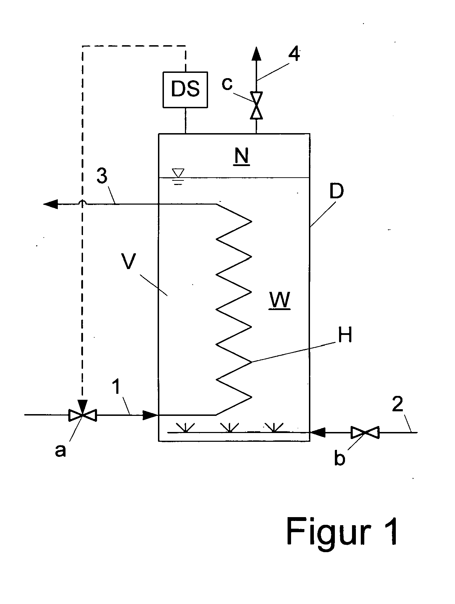

Im Folgenden soll die Erfindung anhand eines in der Figur 1 schematisch dargestellten Ausführungsbeispiels näher erläutert werden.

Das Ausführungsbeispiel zeigt einen Verdampfer in einer Synthesegasanlage, in dem flüssiges, tiefkaltes Kohlenmonoxid im indirekten Wärmetausch mit warmem Wasser verdampft wird.

Über Leitung 1 wird flüssiges Kohlenmonoxid in den Verdampfer V eingeleitet, der mit einem Druckbehälter D ausgeführt ist. Der Druckbehälter D ist mit einem Wasserbad W gefüllt, dem Stickstoff N überlagert ist. Mit Hilfe von Niederdruckdampf 2, dessen Menge über das Regelorgan b geregelt wird, wird das Wasserbad W auf einer konstanten Temperatur von ca. 40°C gehalten. Das Wasser überträgt die für die Verdampfung notwendige Enthalpie auf das in der Heizschlange H strömende Kohlenmonoxid, so dass gasförmiges Kohlenmonoxid über Leitung 3 den Verdampfer V verlässt. Tritt eine Leckage in der Heizschlange H auf, kann flüssiges Kohlenmonoxid in das warme Wasser W übertreten, wo es schlagartig verdampft, das Wasser W abkühlt und im Druckbehälter D zu einem Druckanstieg führt. Dieser Druckanstieg wird über den Druckschalter DS registriert, der bei Überschreiten eines vorgegebenen Grenzdruckes ein Signal ausgibt, durch das das mit einem Verstellantrieb ausgerüstete, in der Leitung 1 angeordnete Absperrorgan a geschlossen und die Zufuhr von flüssigem Kohlenmonoxid zum Verdampfer V unterbrochen wird. Um ein Einfrieren des Wassers W zu verhindern und um das im Druckbehälter D eingeschlossene Kohlenmonoxidgas auf eine Temperatur anzuwärmen, die ausreichend hoch ist, um das Gas gefahrlos in ein Fackelsystem einleiten zu können, wird die Menge an Niederdruckdampf 2 durch das Regelorgan b gesteigert und die Heizleistung erhöht. Das angewärmte Kohlenmonoxidgas wird anschließend über das Regelorgan c kontrolliert aus dem Druckbehälter D abgezogen und über Leitung 4 einer Fackel (nicht dargestellt) zur Entsorgung zugeführt.

## Patentansprüche

1. Verfahren zur Ableitung von Leckagegas aus einem Verdampfer, durch den eine Flüssigkeit in einem Leitungssystem geführt und dabei verdampft wird, **dadurch gekennzeichnet, dass** das Leckagegas in einem Druckbehälter aufgefangen und anschließend zur Entsorgung geregelt einer Fackel zugeführt wird.

2. Verfahren nach Anspruch 1, **dadurch gekennzeichnet, dass** der Druck im Druckbehälter kontinuierlich überwacht und bei Überschreiten eines vorgegebenen Druck-Grenzwertes ein Signal ausgegeben wird, das dazu verwendet wird, die Zufuhr von zu verdampfender Flüssigkeit zum Verdampfer zu unterbrechen.

3. Verfahren nach einem der Ansprüche 1 oder 2, **dadurch gekennzeichnet, dass** eine Temperatur überwacht wird, deren Größe sich durch austretendes Leckagegas verändert, und dass bei Unterschreiten eines vorgegebenen Temperatur-Grenzwertes ein Signal ausgegeben wird, das dazu verwendet wird, die Zufuhr von zu verdampfender Flüssigkeit zum Verdampfer zu unterbrechen.

4. Vorrichtung zur Ableitung von Leckagegas aus einem Verdampfer, durch den eine Flüssigkeit in einem Leitungssystem führ- und dabei verdampfbar ist, **dadurch gekennzeichnet, dass** sie einen Druckbehälter umfasst, der den Verdampfer umgibt und der mit einer Leitung (Fackelleitung) mit einer Fackel verbunden ist.

5. Vorrichtung nach Anspruch 4, **dadurch gekennzeichnet, dass** sie eine Einrichtung zur Überwachung des im Druckbehälter herrschenden Druckes umfasst, die mit einem in der Zuführungsleitung für die zu verdampfende Flüssigkeit angeordneten Absperrorgan derart in Wirkverbindung steht, das das Absperrorgan geschlossen wird, sobald der Druck im Druckbehälter einen Grenzwert überschreitet.

6. Vorrichtung nach einem der Ansprüche 4 oder 5, **dadurch gekennzeichnet, dass** sie mit Temperatur-Tief-Schaltern ausgerüstet ist, mit denen die Temperatur in der Fackelleitung und im Verdampfer überwachbar sind, und die mit einem in der Zuführungsleitung für die zu verdampfende Flüssigkeit angeordneten Absperrorgan derart in Wirkverbindung steht, das die Zuführungsleitung durch das Absperrorgan geschlossen wird, sobald die Temperatur im Druckbehälter einen Grenzwert unterschreitet.
